(19) Europäisches Patentamt
European Patent Office
Office européen des brevets

(11) **EP 0 643 505 B1**

(12) **FASCICULE DE BREVET EUROPEEN**

(45) Date de publication et mention
de la délivrance du brevet:
**21.03.2001 Bulletin 2001/12**

(51) Int Cl.⁷: **H04J 14/08**, H04J 14/02,
H04J 3/16

(21) Numéro de dépôt: **94401938.9**

(22) Date de dépôt: **31.08.1994**

(54) **Trames multidébits pour réseau de télécommunications étoilé arborescent**

Mehrere Bitraten enthaltender Rahmen für ein verzweigtes sternförmiges
Telekommunikationsnetzwerk

Multirate frames for a branched star telecommunications network

(84) Etats contractants désignés:
**DE GB**

(30) Priorité: **15.09.1993 FR 9311079**

(43) Date de publication de la demande:
**15.03.1995 Bulletin 1995/11**

(73) Titulaire: **FRANCE TELECOM**
**75015 Paris (FR)**

(72) Inventeur: **Abiven, Jacques**
**F-22420 Plouaret (FR)**

(74) Mandataire: **Cabinet Martinet & Lapoux**
**BP 405**
**78055 Saint Quentin en Yvelines Cédex (FR)**

(56) Documents cités:
**WO-A-89/05078        WO-A-92/22151**

**Description**

La présente invention concerne, de manière générale, l'accès multiple à répartition dans le temps et le multiplexage temporel dans des réseaux de télécommunications. Plus particulièrement, l'invention a trait à des structures de trame multidébit, également appelée trame multivitesse, pour réseaux de télécommunications étoilés arborescents notamment des réseaux à fibre optique.

Une trame multidébit, comme décrit dans la EP-A-0485260, est définie comme une trame obtenue par multiplexage à division du temps ou accès multiple à répartition dans le temps de données ayant des débits en ligne, c'est à dire des débits dans un support de transmission, qui sont différents ; ainsi un intervalle de temps, tel que cellule temporelle de trame, ayant une durée constante peut être alloué à un nombre de bits différent de celui alloué à un autre intervalle de temps en fonction des débits de sources dont sont issus les bits. Une trame multidébit de ce type diffère de la composition d'une trame classique qui résulte du multiplexage temporel de données à débits différents, en élevant ces débits différents à un unique débit résultant en ligne.

Dans les réseaux partagés à fibre optique, la technique antérieure distingue principalement deux modes de transmission entre deux équipements qui sont le mode semi-duplex, dit également transmission à l'alternat, et le mode full-duplex, dit également transmission bidirectionnelle simultanée, qui résulte d'un multiplexage en longueur d'onde.

Dans le mode semi-duplex, le sens de la transmission change alternativement. Pendant que l'un des équipements émet des données, l'autre équipement reçoit ces données, et inversement. Dans chaque équipement, il y a une phase d'émission et une phase de réception qui ne se recouvrent pas. Pour un débit de données prédéterminé D entre les deux équipements, le débit en ligne est au moins égal à 2D compte tenu du partage temporel alternatif du support de transmission entre les deux équipements. En fait, un temps de propagation et un temps de garde de suppression d'interférence augmente ce débit en ligne à une valeur sensiblement égale à 2,5 D.

Dans le mode de transmission full-duplex par multiplexage en longueur d'onde, chacun des deux équipements raccordés à des extrémités respectives d'une fibre optique émet avec une longueur d'onde respective dans cette fibre optique vers l'autre équipement.

Chacun de ces deux modes de transmission possède ses propres avantages et inconvénients.

Le mode semi-duplex est particulièrement bien adapté à la transmission de données à bas débit. Le doublement du débit en ligne n'est pas limitatif à ces débits pour les équipements et support de transmission, et il peut être mis en oeuvre par utilisation de composants réversibles d'émission/réception peu coûteux. Notamment, une seule diode peut être utilisée en émission et réception en inversant la polarisation de celle-ci. Une telle diode présente une plage de fréquences de fonctionnement autorisant son utilisation à des fréquences respectives différentes en émission et réception. Le mode de transmission par multiplexage en longueur d'onde est la seule technique efficace pour des données à haut débit ; il recourt à des duplexeurs optiques coûteux nécessaires pour la mise en oeuvre simultanément d'une réception à une première longueur d'onde et d'une transmission à une seconde longueur d'onde.

Le principal objectif de cette invention est de fournir une structure de trame pour réseaux de télécommunications étoilés arborescents mettant en oeuvre le mode de transmission par multiplexage en longueur d'onde selon lequel une trame descendante périodique, produite par un équipement central et destinée à une pluralité d'équipements terminaux, et une trame montante constituée par des groupes de cellules d'usager respectivement produits par des équipements terminaux et destinés à l'équipement central, sont transmises à deux longueurs d'onde respectives différentes en mode bidirectionnel simultané, tout en garantissant un mode de transmission à l'alternat pour chaque équipement terminal à bas débit relativement à deux groupes de cellules de données d'usager des trames montante et descendante respectivement transmis par ledit chaque équipement terminal à bas débit et destiné à ledit chaque équipement terminal à bas débit. Le mode de transmission full-duplex est par contre effectif pour les équipements terminaux à haut débit lorsque cela est possible.

Afin de garantir un mode de transmission à l'alternat pour chaque équipement terminal à bas débit transmettant et recevant des premières cellules de données, des trames descendante et montante périodiques multidébits transmises en mode full-duplex à travers une ligne bidirectionnelle arborescente respectivement à une première longueur d'onde depuis un équipement central vers une pluralité d'équipements terminaux et à une seconde longueur d'onde différente de la première longueur d'onde depuis la pluralité d'équipements terminaux vers l'équipement central, les équipements terminaux recevant et transmettant des cellules de données ayant une durée constante respectivement avec des débits en ligne respectifs différents,

dans lesdites trames descendante et montante, un champ de données utiles étant réservé à des cellules temporelles consécutives en un nombre prédéterminé qui sont destinées à être occupées par des cellules de données respectivement reçues et transmises par des équipements terminaux en communication avec l'équipement central , chaque cellule de données dans ledit champ de données utiles étant localisée par un rang,

sont caractérisées en ce que

à des premières cellules de données dans la trame descendante qui sont reçues par un équipement terminal en communication et qui ont des rangs donnés dans ledit champ de données utiles correspondent des premières cellules de données dans la trame montante transmises par ledit équipement terminal en communication qui ont des rangs dans ledit champ de données utiles respectivement égaux à des premières sommes d'un entier prédéterminé au moins égal à un et desdits rangs donnés modulo le nombre prédéterminé de cellules temporelles dans ledit champ de données utiles.

En pratique, des groupes respectifs de premières cellules de données sont attribués dans les trames à des équipements terminaux en communication et l'entier prédéterminé est sensiblement égal à la moitié du nombre prédéterminé de cellules temporelles dans ledit champ de données utiles.

Par contre, pour les terminaisons à haut débit transmettant et recevant des secondes cellules de données, le mode full-duplex est garanti dans la mesure du possible. Pour cela, des secondes cellules de données dans ladite trame montante, qui sont associées à des secondes cellules de données dans ladite trame descendante reçues par un équipement terminal, sont transmises par ledit équipement terminal dans des premières cellules temporelles dudit champ de données utiles non occupées par des premières cellules de données.

Compte tenu du caractère sporadique des communications ATM et afin d'éviter d'avoir recours systématiquement à un secteur de gestion prévu dans la trame descendante, une seconde cellule de données de trame descendante transmise à un équipement terminal contient le rang d'une première cellule temporelle non occupée dans la trame montante.

Selon une réalisation préférée de l'invention, les débits de données des équipements terminaux sont 192 kbits/s, N x 2048 kbits avec N > 1, et 155,520 Mbit/s, et la durée de chaque cellule temporelle coïncide avec 64 octets au débit en ligne de 196,608 Mbit/s associé au débit de données d'équipement terminal de 155,520 Mbit/s. Ainsi une cellule temporelle contient un paquet ATM de 53 octets.

D'autres caractéristiques et avantages de la présente invention apparaîtront plus clairement à la lecture de la description suivante de plusieurs réalisations préférées de l'invention en référence aux dessins annexés correspondants dans lesquels :

- la figure 1 est un bloc-diagramme schématique d'un réseau de distribution étoilé arborescent à fibre optique selon la technique antérieure ;
- la figure 2 montre des diagrammes temporels de trames montante et descendante transmises entre un terminal de ligne et des terminaisons de réseau dans le réseau de distribution de la figure 1 ; et
- les figures 3A et 3B sont des diagrammes respectifs de deux plans de fréquence de débits de données en ligne dans les trames de la figure 2.

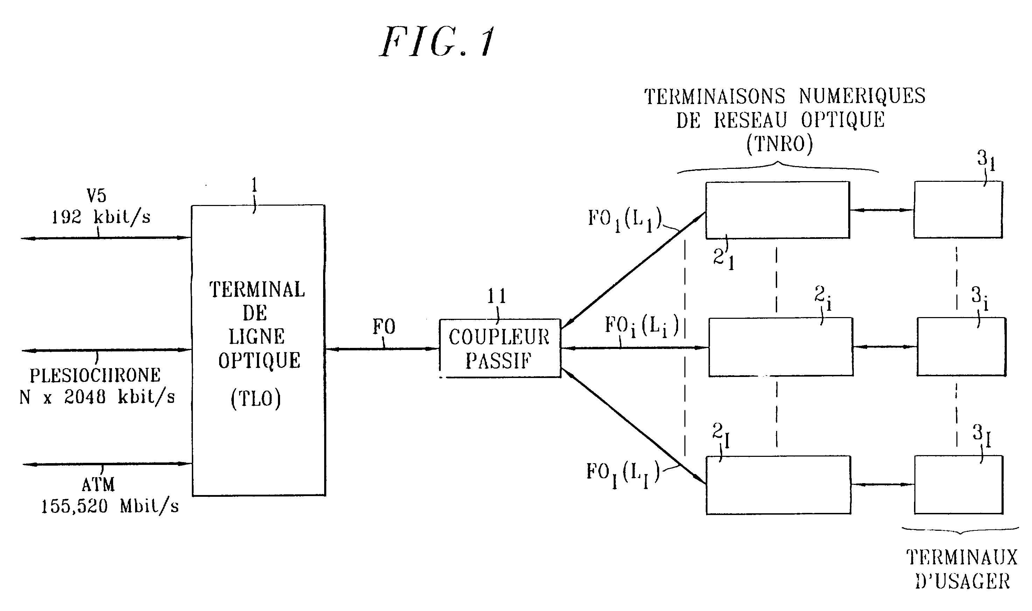

En référence à la figure 1, un équipement central et des équipements terminaux dans un réseau de distribution étoilé arborescent à fibre optique contribuant à l'établissement de trames selon l'invention consistent typiquement en un terminal de ligne optique (TLO) 1 et I terminaisons numériques de réseau optique (TNRO) $2_1$ à $2_I$. Trois ports d'entrée/sortie du terminal 1 sont connectés respectivement à des liaisons de natures et débits différents, telles qu'une liaison asynchrone A.T.M. (Asynchronous Terminal Mode) à un débit de 155,520 Mbit/s, une liaison plésiochrone à un débit de N.2048 kbit/s, N étant un entier positif, une liaison conforme à la Recommandation V5 du C.C.I.T.T. pour l'accès de base au réseau numérique à intégration de services RNIS à 192 kbit/s ou encore une liaison analogique. Un coupleur optique passif 11, ou bien plusieurs coupleurs optiques (non représentés) répartis suivant une ligne de transmission bidirectionnelle arborescente, couple le terminal 1 aux I terminaisons numériques $2_1$ à $2_I$ qui sont respectivement connectées à I terminaux d'usager $3_1$ à $3_I$.

Trois entrées du terminal de ligne optique 1 reçoivent respectivement des données au haut débit ATM, au débit plésiochrone et au bas débit conforme à la recommandation V5. Le terminal 1 regroupe les données de chaque liaison en des cellules de données ayant une durée prédéterminée et multiplexe ces données par groupes de cellules. Les cellules ont différents débits en ligne qui coexistent dans des trames descendantes transmises vers les terminaisons numériques $2_1$ à $2_I$. Le coupleur optique 11 possède un premier accès relié au terminal de ligne optique 1 par une fibre optique FO, et I seconds accès reliés respectivement aux I terminaisons numériques $2_1$ à $2_I$ par I fibres optiques $FO_1$ à $FO_I$. Les trames produites par le terminal de ligne 1 sont acheminées vers chacune des terminaisons numériques $2_1$ à $2_I$ à travers le coupleur 11 et via les I fibres optiques respectives.

Il est à noter, tout au long de la description qui suit, que les problèmes de synchronisation relatifs à la formation des trames montantes reçues par le terminal de ligne 1 à partir de groupes de cellules respectifs transmis par les terminaisons numériques (usagers) $2_1$ à $2_I$ ne sont pas considérés. Le procédé retenu pour cette synchronisation est par exemple celui décrit dans le brevet français FR-B-2 636 482. Ce procédé considère la disparité des temps de propagation de données entre les différentes terminaisons numériques $2_1$ à $2_I$ et le terminal de ligne 1, puisque les fibres optiques entre les terminaisons numériques $2_1$ à $2_I$ et le coupleur passif 11 ont des longueurs respectives $L_1$ à $L_I$ différentes. En fonction des longueurs de fibre optique respectives $L_1$ à $L_I$, des retards correcteurs respectifs sont appliqués aux transmissions de données dans les terminaisons numériques $2_1$ à $2_I$ afin de former par accès multiple à répartition dans le temps, au niveau du coupleur 11, des trames montantes de groupes de cellules d'usager contigus, en excluant tout chevauchement entre cellules transmises par deux terminaisons numériques distinctes et tout espacement inutile vide de données entre deux cellules successives.

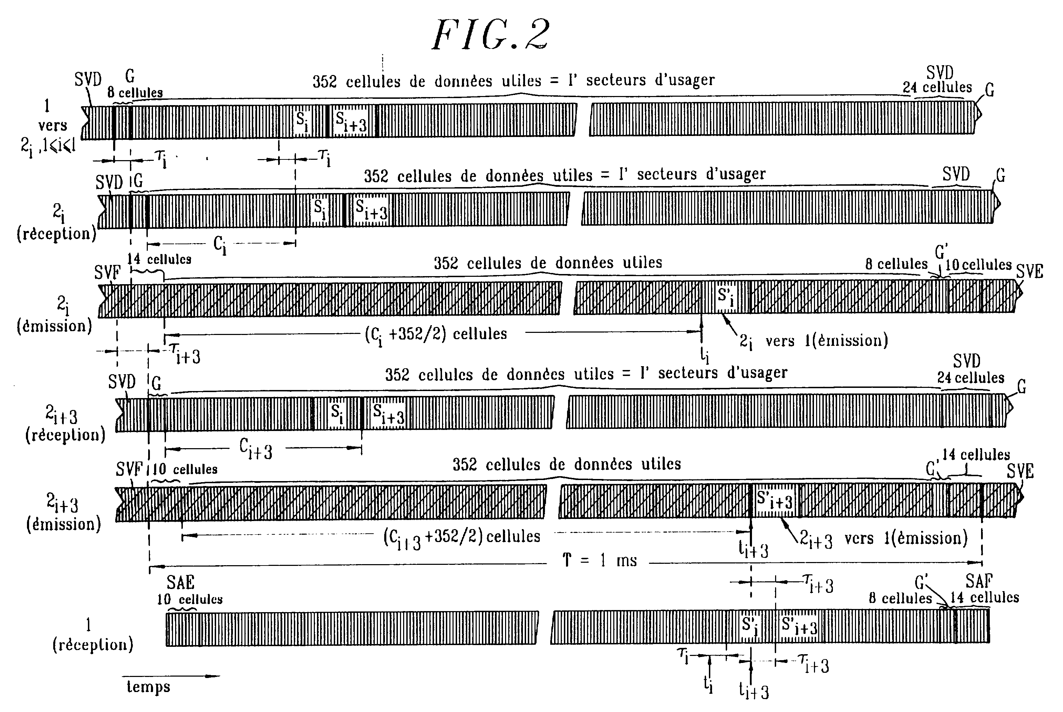

Les première et troisième lignes dans la figure 2 respectivement montrent une trame descendante transmise du terminal de ligne 1 vers les terminaisons numériques $2_1$ à $2_I$ et un secteur d'usager $S'_i$ constitué par un groupe de cellules de données élémentaires et transmis depuis une terminaison numérique $2_i$ vers le terminal de ligne 1. Les trames descendantes, transmises du terminal de ligne 1 vers les terminaisons numériques $2_1$ à $2_I$, et les trames montantes formées au niveau du coupleur 11 et résultant d'un accès multiple à répartition dans le temps de groupes de cellules d'usager à différents débits transmis par I' terminaux d'usager en communication parmi les I terminaux d'usager $3_1$ à $3_I$, l'entier I' étant inférieur à I, ont une période T = 1 ms et comprennent chacune 384 cellules de données élémentaires. Des trames descendantes et montantes sont transmises simultanément par multiplexage de première et seconde longueurs d'onde différentes. Les trames descendantes sont transmises à la première longueur d'onde du terminal de ligne 1 vers les terminaisons numériques $2_1$ à $2_I$, et les secteurs d'usager, tels que le secteur $S'_i$ à la troisième ligne de la figure 2, modulent la seconde longueur d'onde dans I' terminaisons numériques en communication pour une transmission vers le terminal de ligne 1.

Chaque trame descendante comprend successivement un secteur de gestion G à 8 cellules de données, un champ de données utiles réservé à 352 cellules réparties dans au plus I' secteurs d'usagers, dits groupes de cellules, destinés respectivement à I' terminaux d'usager en communication parmi les I terminaux $3_1$ à $3_I$, et un secteur vide de données SVD ayant une longueur de 24 cellules. Chaque trame montante, telle que celle montrée à la sixième ligne dans la figure 2, est délimitée par un secteur d'alignement d'en-tête SAE et un secteur d'alignement de fin de trame SAF qui encadrent un champ de données utiles à 352 cellules incluant I' secteurs de cellules d'usager transmis vers le terminal de ligne 1 respectivement depuis les terminaux d'usager en communication respectifs et un secteur de gestion G' à 8 cellules. Les secteurs d'alignement d'en-tête et de fin de trame SAE et SAF comprennent respectivement 10 et 14 cellules élémentaires de données.

Selon l'invention, des données à caractère asynchrone au haut débit ATM de 155,520 Mbit/s coexistent dans les trames montantes et descendantes avec des données de service synchrone dont les débits sont, par exemple, des débits de la hiérarchie plésiochrone N x 2048 kbit/s. L'attribution d'un débit à un terminal d'usager $3_i$ résulte de l'allocation d'un nombre donné de cellules temporelles des trames montante et descendante à des cellules de données transmises et reçues par ce terminal. A chaque terminal d'usager en communication est attribuée une ou plusieurs cellules temporelles dans chaque trame en fonction du débit du terminal. Bien que la figure 2 montre des secteurs d'usager, tels que les secteurs $S_i$ et $S_{i+3}$ dans la trame descendante et les secteurs $S'_i$ et $S'_{i+3}$ dans la trame montante, formés de cellules élémentaires consécutives dans la trame, des secteurs d'usager peuvent être formés par des cellules non consécutives dans la trame.

Pour la définition de la taille des cellules temporelles, deux contraintes doivent être satisfaites. D'une part, afin de faciliter la synchronisation, tant en émission qu'en réception, des terminaisons numériques avec les cellules de données dans les cellules temporelles qui leur sont allouées, il est nécessaire que la fenêtre temporelle définissant une cellule temporelle coïncide avec un nombre entier de bits et qu'un instant de début de cellule coïncide avec une phase de début de bit, quel que soit le débit et cela bien que le débit ATM à 155,520 Mbit/s ne soit pas multiple des bas débits de la hiérarchie plésiochrone et d'accès de base. D'autre part, puisque la technique temporelle asynchrone ATM est caractérisée par une unité de transfert d'informations, appelé paquet, comprenant (53 x 8) bits à 155,520 Mbit/s, c'est-à-dire 53 octets à 19,440 Moctets/s, chaque cellule temporelle doit avoir une durée telle qu'elle comprend au moins (53 x 8) bits à 155,520 Mbit/s.

Pour satisfaire ces deux contraintes, deux approches sont offertes en posant comme condition que les débits en ligne dans des trames montantes et descendantes respectivement associés aux débits ATM, plésiochrone et d'accès de base sont multiples entre eux afin que chaque cellule temporelle de trame soit limitée à un intervalle temporel coïncidant avec un nombre entier de bits, quel que soit le débit en ligne. Cette condition conduit à choisir des horloges d'émission et de réception de données en ligne dans les terminaisons numériques $2_1$ à $2_I$ et le terminal de ligne 1 avec des fréquences respectives supérieures, ou le cas échéant égales, aux fréquences des données produites par les terminaux d'usager $3_1$ à $3_I$, afin de ne pas installer des mémoires tampons de tailles prohibitives dans les terminaisons $2_1$ à $2_I$ et le terminal de ligne 1 pour compenser des écarts entre débits en ligne et débits de données associés.

La première approche, représentée sous forme schématique à la figure 3A, vise à satisfaire aux exigences suivantes :

(a) Les débits en ligne sont multiples de l'un d'eux, comme signalé par les coefficients entiers $k_1$ et $k_2$.
(b) Les débits en ligne sont multiples des débits de données associés, ou multiples d'un plus petit commun multiple PPCM d'un ensemble de débits de données, tel que le débit en ligne de 768 Mbit/s pour les débits de données 192 Mbit/s et 256 Mbit/s, comme signalé par les coefficients entiers N1, N2 et N3. Cette exigence facilite la réalisation de chacune des horloges de réception et d'émission de données en ligne dans les terminaisons numériques et le terminal de ligne en combinant un multiplieur de fréquence avec une horloge couramment employée à une fréquence correspondante à un débit de données, ce qui évite ainsi de faire appel à des composants peu répandus ou spécifiques qui sont donc de coût plus élevé.

(c) Le haut débit en ligne associé au débit de données ATM est d'une part, comme mentionné en (b), multiple du débit ATM et, d'autre part, multiple entier du nombre de bits par cellule élémentaire de données, lesquels bits sont au débit en ligne associé au débit de données ATM. Le premier point précité résulte de la considération énoncée dans le paragraphe (b) ci-dessus concernant le coût des horloges aux fréquences des débits en ligne, et le second point garantit un nombre entier de cellules élémentaires par trame. Les trames montantes et descendantes ont une période égale à 1 ms et le débit en ligne associé au débit de données ATM s'écrit sous la forme $d_{atm}$ kbit/s, soit $d_{atm}$ bit/ms, et donc le nombre de bits par trame au débit en ligne associé au débit ATM est égal à $d_{atm}$. Si ce nombre $d_{atm}$ est multiple du nombre de bits par cellule élémentaire au débit en ligne associé au débit ATM, il y a donc un nombre entier de cellules dans la trame. Ce second point assure une continuité de synchronisation d'une trame à la trame suivante.

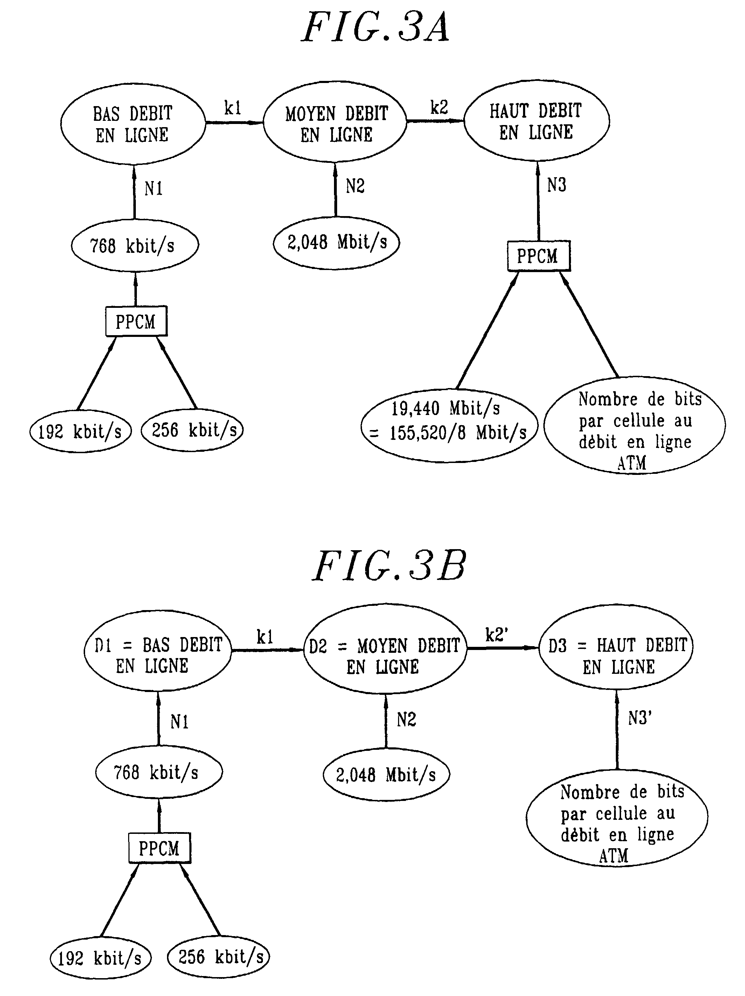

La seconde approche, schématisée dans la figure 3B, vise à satisfaire aux exigences (a) et (b) énoncées ci-dessus et, en outre , à l'exigence suivante :

(c') Le haut débit en ligne associé au débit ATM est uniquement multiple du nombre de bits par cellule élémentaire de données, lesquels bits sont au débit en ligne associé au débit des données ATM, et ce haut débit n'est pas multiple entier du débit ATM.

Cette seconde approche, sacrifiant l'exigence d'un haut débit en ligne qui est multiple du débit ATM, contrairement à la première approche, implique un coût plus élevé des composants d'horloge d'émission et de réception des données ATM en ligne.

En pratique, la première approche pose aujourd'hui des problèmes de faisabilité, les fréquences d'horloge d'émission et de réception des données ATM en ligne pouvant devenir trop élevées. Chacune de ces approches est basée en outre sur le fait que chaque cellule élémentaire de données doit contenir un nombre de bits, au débit en ligne associé au débit ATM, sensiblement supérieur ou égal au nombre de bits dans un paquet ATM normalisé, soit (8 x 53) bits, afin qu'une cellule contienne un paquet ATM.

A titre d'exemple, pour la première approche (figure 3A), il est proposé une cellule élémentaire à (60 x 8) bits au haut débit en ligne associé au débit ATM. Le plus petit commun multiple PPCM de (60x8) et 155520 est égal à 311040. Le débit en ligne minimal associé au débit ATM doit donc être choisi égal à 311040 kbit/s. Par ailleurs, et comme représenté par les coefficients entiers N2, N3 et k2, dans la figure 3A, cette première approche doit satisfaire la condition :

$$2048 \times N2 \times k2 = 311040 \times N3$$

soit:

$$2^{11} \times N2 \times k2 = (2^8 \times 3^5 \times 5) \times N3$$

soit:

$$2^3 \times N2 \times k2 = (3^5 \times 5) \times N3.$$

Par comparaison entre les différents nombres et coefficients de part et d'autre de l'égalité de la dernière équation ci-dessus, N3 est au moins égal à $2^3$. Ainsi, le haut débit en ligne associé au débit ATM doit être choisi au minimum égal à $2^3$ x 311040 kbit/s = 2488320 kbit/s. Cette dernière valeur de haut débit est difficilement mise en oeuvre. Toutefois, cette première approche peut être retenue pour des services asynchrones à des débits inférieurs au débit ATM normalisé de 155,520 Mbit/s.

Seule la seconde approche (figure 3B) fournit des solutions plus acceptables pour un nombre de bits par cellule élémentaire au débit en ligne associé au débit ATM égal ou sensiblement supérieur à (53 x 8) bits, en sacrifiant le fait d'avoir un haut débit en ligne associé au débit ATM multiple du débit ATM, et donc d'utiliser des horloges d'émission et de réception de données en ligne de moindre coût.

La solution optimale est trouvée pour (64 x 8) bits par cellule élémentaire au haut débit en ligne associé au débit ATM. Cette solution, en se référant à la figure 3B, conduit aux deux équations eq1 et eq2 suivantes :

$$768 \times N1 \times k1 = 2048 \times N2 \qquad (eq1)$$

$$2048 \times N2 \times k2' = 64 \times 8 \times N3' \qquad (eq2)$$

soit :

$$3 \times 2^8 \times N1 \times k1 = 2^{11} \times N2$$

$$2^{11} \times N2 \times k2' = 2^9 \times N3'$$

soit :

$$3 \times N1 \times k1 = 2^3 \times N2$$

$$2^2 \times N2 \times k2' = N3'$$

De ces deux équations ainsi réduites sont déduits les résultats fréquentiels suivants, sachant que le haut débit en ligne associé au débit ATM doit être supérieur ou égal au débit ATM :

N3' = 384
k2' = 8
k1 = 8
N2 = 12
N1 = 4

Ainsi des débits en ligne D1, D2 et D3, respectivement associés aux débits de données 768 kbit/s, 2,048 Mbit/s et 155,520 Mbit/s, prennent les valeurs :

D1 = 3,072 Mbit/s
D2 = 24,576 Mbit/s
D3 = 196,608 Mbit/s

Chaque cellule élémentaire de données d'une trame montante ou descendante peut contenir 64 x 8 bits au débit en ligne D3 = 196,608 Mbit/s, ou 64 bits au débit en ligne D2 = 24,576 Mbit/s, ou bien 8 bits au débit en ligne D1 = 3,072 Mbit/s.

En référence de nouveau à la figure 2, les structures des trames montantes et descendantes transmises entre les terminaisons numériques $2_1$ à $2_I$ et le terminal de ligne 1 sont maintenant décrites en détail. On distingue deux types de terminaisons: d'une part les terminaisons dites à haut débit opérant typiquement au débit ATM ou à des débits élevés de la hiérarchie plésiochrone et utilisant des duplexeurs optiques, et, d'autre part, les terminaisons dites à bas débit fonctionnant par exemple aux bas débits de la hiérarchie plésiochrone ou au débit d'accès de base RNIS et utilisant des composants optiques réversibles.

Les première et dernière lignes de la figure 2 montrent respectivement une trame descendante transmise du terminal de ligne 1 vers chacune des terminaisons numériques $2_1$ à $2_I$ et une trame montante. Les secteurs de gestion G' et G, à huit cellules chacun, dans les trames montante et descendante sont destinés respectivement à des premiers mots de gestion pour demander l'attribution de cellules élémentaires de données par les terminaisons numériques $2_1$ et $2_I$, et des seconds mots de gestion pour attribuer des cellules élémentaires à ces terminaisons demanderesses, ces seconds mots étant transmis par le terminal de ligne 1. Les premiers et seconds mots de gestion ont des débits en ligne respectifs associés aux débits de données des terminaux d'usager $3_1$ à $3_I$ afin qu'ils puissent être émis, reçus et interprétés directement par les terminaisons $2_1$ à $2_I$ sans nécessiter des moyens de synchronisation supplémentaires. Dans les secteurs de gestion G et G' sont ainsi définis trois sous-secteurs aux débits en ligne D1, D2 et D3 associés respectivement aux bas débit, moyen débit et haut débit de données des terminaux $3_1$ à $3_I$. Chacun de ces sous-secteurs est destiné, tour à tour, à chacune des terminaisons en communication au débit concerné. Les secteurs de gestion G et G' contiennent, en outre, des mots de synchronisation respectifs aux différents débits en ligne destinés à synchroniser périodiquement les terminaisons et le terminal de ligne.

La trame descendante contient également 352 cellules de données utiles formant I' secteurs d'usager, tels que les secteurs $S_i$ et $S_{i+3}$ respectivement destinés aux terminaisons numériques à bas débit $2_i$ et $2_{i+3}$.

Comme montré aux deuxième et quatrième lignes de la figure 2, la trame descendante montrée à la première ligne est reçue avec des retards respectifs $\tau_i$ et $\tau_{i+3}$ par les deux terminaisons à bas débit $2_i$ et $2_{i+3}$ auxquelles sont respectivement destinés les secteurs $S_i$ et $S_{i+3}$. Les retards $\tau_i$ et $\tau_{i+3}$ dépendent des longueurs $L_i$ et $L_{i+3}$ des fibres optiques respectives séparant le terminal de ligne 1 et les terminaisons numériques à bas débit $2_i$ et $2_{i+3}$.

Les terminaisons numériques $2_1$ à $2_I$ sont synchronisées périodiquement à la fréquence de trame avec des mots de synchronisation respectifs aux différents débits en ligne prévus dans le secteur de gestion G. Grâce à la transmission préalable de premiers et seconds mots de gestion dans les secteurs de gestion G et G', des secteurs respectifs de cellules élémentaires sont attribués aux I' terminaisons en communication parmi les I terminaisons $2_1$ à $2_I$. Un secteur d'usager constituant un groupe de cellules est attribué à une terminaison donnée par le terminal de ligne 1 en introduisant les rangs de ces cellules dans la trame, dans des mots de gestion respectifs de secteurs de gestion G. Les mots de synchronisation aux différents débits transmis dans le secteur de gestion G permettent aux différentes terminaisons d'être synchronisées avec la trame et ainsi établir des fenêtres temporelles respectives coïncidant avec les cellules temporelles contenant les cellules de données qui leur sont respectivement destinées.

Les troisième et cinquième lignes de la figure 2 montrent deux secteurs d'usager $S'_i$ et $S'_{i+3}$ transmis respectivement des terminaisons à bas débit $2_i$ et $2_{i+3}$ vers le terminal de ligne 1 et destinés à former partie d'une trame montante montrée à la sixième ligne dans cette figure 2. Les secteurs $S'_i$ et $S'_{i+3}$ sont représentés insérés dans une trame seulement à des fins d'explication ; seuls les secteurs $S'_i$ et $S'_{i+3}$ sont effectivement établis et transmis respectivement par les terminaisons à bas débit $2_i$ et $2_{i+3}$. Les parties hachurées en traits obliques dans les trames montrées aux troisième et cinquième lignes dans la figure 2, correspondent en fait à des temps morts de transmission respectivement dans les terminaisons à bas débit $2_i$ et $2_{i+3}$.

Chaque terminaison $2_1$ à $2_I$ est resynchronisée à chaque période de trame. Dans l'exemple montré à la troisième ligne, respectivement cinquième ligne, dans la figure 2, la terminaison à bas débit $2_i$, respectivement $2_{i+3}$, produit, en réponse à l'instant de début de réception de la trame descendante, chaque cellule d'un secteur $S'_i$, respectivement $S'_{i+3}$, de trame montante après une somme de premier et second retard suivants:

(1)- Le premier retard est égal au produit de la durée d'une cellule par une somme d'un premier rang $C_i$, respectivement $C_{i+3}$, d'une cellule qui est associée à ladite chaque cellule d'un secteur de trame montante et qui est reçue dans le champ de données utiles de la trame descendante dans le secteur $S_i$, respectivement $S_{i+3}$, et d'un second rang, ici 352/2, d'une cellule médiane dans le champ de données utiles. Chaque cellule de trame montante possède une cellule associée dans une trame descendante puisque l'attribution d'un débit à une terminaison se caractérise par l'affectation de cellules en nombre égal dans les trames montantes et trames descendantes successives.

(2)- Le second retard est la somme d'un temps de garde et d'un retard correcteur. Le retard correcteur est calculé selon le procédé défini dans la FR-A-2 636 482 et dépend de la longueur $L_i$, respectivement $L_{i+3}$, de la fibre optique $FO_i$, respectivement $FO_{i+3}$, séparant le terminal de ligne 1 de la terminaison à bas débit $2_i$, respectivement $2_{i+3}$. Le temps de garde est constant dans toutes les terminaisons $2_i$ à $2_I$ et égal à la durée d'au moins huit cellules consécutives incluses dans le secteur de gestion G ou G' afin que les terminaisons et le terminal 1 ne transmettent pas pendant la réception d'un secteur de gestion. Ce temps de garde serait en outre nécessaire au basculement de l'état de réception à l'état d'émission relativement à un secteur dans une terminaison à bas débit fonctionnant à l'alternat si l'émission d'un secteur, dans une trame montante, n'était pas différé de 352/2 cellules par rapport à la réception du secteur de même rang dans la trame descendante. Les retards correcteurs compensent les différences de temps de propagation proportionnels aux longueurs des fibres optiques $FO_1$ à $FO_I$ afin que les secteurs émis par les terminaisons en communication constituent sans chevauchement temporel la trame montante au niveau du coupleur 11 . Plus la terminaison est éloignée du coupleur 11, plus le retard correcteur est faible. Puisque la trame montante et la trame descendante contiennent 24 cellules vides dans les secteurs SVD et SAE et SAF, le retard correcteur peut être au plus égal à 24 - 8 = 16 cellules pour la terminaison la plus proche du coupleur 11. Ainsi, par exemple, selon la troisième ligne dans la figure 2, un retard correcteur 14 - 8 = 6 cellules est imposé dans la terminaison à bas débit $2_i$. Selon la cinquième ligne dans la figure 2, un retard correcteur de 10 - 8 = 2 cellules est imposé dans la terminaison $2_{i+3}$ qui est plus éloignée du coupleur 11 que la terminaison $2_i$.

Selon la définition du premier retard et en référence à la trame montante montrée à la sixième ligne dans la figure 2 , chaque cellule d'un secteur $S'_i$ transmis de la terminaison à bas débit $2_i$ vers le terminal de ligne 1 a un rang dans le champ de données utiles de la trame montante égal à la somme modulo 352 du rang $C_i$ d'une cellule associée à ladite chaque cellule et transmise par le terminal de ligne 1 dans le secteur $S_i$ vers la terminaison $2_i$, et du rang 352/2 = 176 de la cellule médiane dans le champ de données utiles. Ainsi, la première cellule de champ utile dans la trame descendante correspond à la 177ième cellule de champ utile dans la trame montante et les 177ième et 352ième cellules dans la trame descendante correspondent aux première et 176ième cellules de trame montante.

Le mode de transmission full duplex mettant en oeuvre ce décalage de rang entre cellules de trame montante et cellules associées de trame descendante pour les terminaisons à bas débit, d'une part garantit que les terminaisons à bas débit transmettent et reçoivent en mode à l'alternat en utilisant des composants optiques réversibles puisque des cellules de données ne sont pas simultanément émises et reçues par une même terminaison numérique $2_i$, et, d'autre part garantit que les terminaisons à haut débit transmettent et reçoivent simultanément des cellules de données au moyen de duplexeurs optiques. En effet, selon l'invention, aux terminaisons à haut débit sont attribuées des cellules de trame montante et descendante qui ne sont pas occupées par des cellules de données émises et reçues par les terminaisons à bas débit. Pour ces terminaisons à haut débit, le rang d'une cellule de trame montante associée à une cellule de trame descendante ne correspond pas systématiquement au rang de ladite cellule de trame descendante additionné au rang de la cellule médiane du champ de données utiles, soit 352/2. La première cellule, ou le premier secteur, libre de trame montante est allouée à la terminaison numérique au haut débit de données à laquelle est destinée une cellule, ou un secteur, de trame descendante. En fonction de l'occupation des cellules temporelles de trame montante et des cellules temporelles de trame descendante ayant des rangs respectifs égaux aux sommes des rangs desdites cellules de trame montante et du rang d'une cellule médiane de champ de données utiles par des cellules de données émises et reçues par les terminaisons à bas débit, des émission et réception simultanées sont possibles dans une terminaison à haut débit notamment lorsque les trames montantes et descendantes sont peu remplies par des données émises et reçues par des terminaisons à bas débit. Il est à noter qu'à une cellule temporelle ou un groupe de cellules temporelles non occupée par des données à bas débit dans la trame descendante correspond une cellule ou un groupe de cellules non occupée par des données à bas débit dans la trame montante et ayant un emplacement nécessairement décalé d'une demi-période de champ de données utiles par rapport à celui dans la trame descendante. Dès qu'une cellule ou un groupe de cellules de données à haut débit est à transmettre par une terminaison à haut débit, le terminal de ligne 1 recherche une première cellule ou un premier groupe de cellules disponible dans la trame montante pour l'allouer à la terminaison numérique à haut débit en transmettant le ou les rangs en code binaire de ces cellules dans la trame descendante.

Concernant la caractéristique précitée, la technique antérieure prévoit uniquement, comme décrit dans le FR-B-2 636 482 et la EP-A-485 260, de garantir une transmission à l'alternat en proposant qu'une trame descendante incluant des secteurs d'usager soit transmise du terminal de ligne 1 vers les terminaisons $2_1$ à $2_I$ et que, suite à la réception par toutes les terminaisons $2_1$ à $2_I$ de l'intégralité de la trame descendante, des secteurs d'usager respectifs soient transmis par les terminaisons en communication $2_1$ à $2_I$ vers le terminal de ligne 1 pour former une trame montante. Ainsi, la technique antérieure n'est pas optimale relativement aux transmissions à haut débit puisqu'une terminaison ne peut simultanément émettre et recevoir.

Afin d'éviter toute superposition de cellules transmises par et destinées à une même terminaison numérique à bas débit, le nombre de cellules attribuées à une terminaison numérique à bas débit est au plus égal à la moitié du nombre de cellules dans le champ de données utiles. Cette limitation du nombre de cellules attribuées à une même terminaison numérique à bas débit évite toute simultanéité d'émission et de réception de cellules par cette terminaison numérique compte tenu du décalage numérique de rangs entre cellules de trame montante et cellules de trame descendante associées.

Selon une variante de l'invention, notamment destinée à s'adapter au caractère sporadique des transmissions asynchrones au débit ATM, les (64-53)x8 emplacements de bit non utilisés par un paquet ATM dans chaque cellule de trame descendante et donc vides de données utiles, selon l'exemple d'une cellule à (64x8) bits au haut débit en ligne préconisé ci-dessus, sont remplis par le terminal de ligne 1 par un rang en code binaire à attribuer à une cellule de trame montante associée à ladite chaque cellule. Cette solution évite de recourir au secteur de gestion G systématiquement pour chaque paquet d'une rafale ATM et vise ainsi à satisfaire à des contraintes de fonctionnement en temps réel relatives à l'ATM.

## Revendications

1.  Trames descendante et montante périodiques multidébit transmises en mode full-duplex à travers une ligne bidirectionnelle arborescente (11) respectivement à une première longueur d'onde depuis un équipement central (1) vers une pluralité d'équipements terminaux ($2_1$-$2_I$) et à une seconde longueur d'onde différente de la première longueur d'onde depuis la pluralité d'équipements terminaux ($2_1$-$2_I$) vers l'équipement central (1), les équipements terminaux recevant et transmettant des cellules de données ayant une durée constante respectivement avec des débits en ligne respectifs différents (D1, D2, D3),

dans lesdites trames descendante et montante, un champ de données utiles étant réservé à des cellules temporelles consécutives en un nombre prédéterminé qui sont destinées à être occupées par des cellules de données respectivement reçues ($S_i$, $S_{i+3}$) et transmises ($S'_i$,$S'_{i+3}$) par des équipements terminaux en communication ($2_i$, $2_{i+3}$) avec l'équipement central (1), chaque cellule de données dans ledit champ de données utiles étant localisée par un rang,

caractérisées en ce que

à des premières cellules de données ($S_i$, $S_{i+3}$) dans la trame descendante qui sont reçues par un équipement terminal en communication et qui ont des rangs donnés ($C_i$, $C_{i+3}$) dans ledit champ de données utiles correspondent des premières cellules de données ($S'_i$, $S'_{i+3}$) dans la trame montante transmises par ledit équipement terminal en communication qui ont des rangs dans ledit champ de données utiles respectivement égaux à des premières sommes d'un entier prédéterminé au moins égal à un et desdits rangs donnés modulo le nombre prédéterminé de cellules temporelles (352) dans ledit champ de données utiles.

2.  Trames descendante et montante conformes à la revendication 1 , caractérisées en ce que des groupes respectifs de premières cellules de données sont attribués dans les trames à des équipements terminaux en communication et l'entier prédéterminé est sensiblement égal à la moitié (176) du nombre prédéterminé de cellules temporelles dans ledit champ de données utiles.

3.  Trames descendante et montante conformes à la revendication 2, caractérisées par des secondes cellules de données dans ladite trame montante qui sont associées à des secondes cellules de données dans ladite trame descendante reçues par un équipement terminal et qui sont transmises par ledit équipement terminal ($2_1$-$2_I$) dans des premières cellules temporelles libres dudit champ de données utiles non occupées par des premières cellules de données.

4.  Trames descendante et montante conformes à la revendication 3, caractérisées en ce que lesdites premières et secondes cellules de données reçues et transmises par un équipement terminal en communication ($2_i$, $2_{i+3}$) sont consécutivement réunies respectivement en au moins un groupe ($S'_i$, $S'_{i+3}$) dans la trame descendante et en au moins un groupe ($S'_i$, $S'_{i+3}$) dans la trame montante.

5. Trames descendante et montante conformes à la revendication 3 ou 4, caractérisées par au moins une seconde cellule de données de trame descendante contenant le rang d'une première cellule temporelle non occupée dans la trame montante à transmettre à l'équipement terminal.

6. Trames descendante et montante conformes à l'une quelconque des revendications 1 à 5, caractérisées en ce que des cellules temporelles sont attribuées à un équipement terminal en communication en fonction du débit en ligne de l'équipement terminal qui est au moins égal à un débit de données dans ledit équipement terminal.

7. Trames descendante et montante conformes à l'une quelconque des revendications 1 à 6, caractérisées par une transmission de chaque première cellule de données de trame montante par un équipement terminal en communication ($2_i$, $2_{i+3}$) avec un retard par rapport à un instant de début de réception de la trame descendante par l'équipement terminal égal à la somme du produit de la première somme respective par la durée de cellule et au moins d'un retard correcteur dépendant de la longueur ($L_1$, $L_l$) de ladite ligne entre ledit équipement terminal en communication ($2_i$, $2_{i+3}$) et ledit équipement central (1).

8. Trames descendante et montante conformes à l'une quelconque des revendication 1 à 7, caractérisées en ce que lesdits débits en ligne sont multiples entre eux et une durée de chaque cellule temporelle coïncide avec un nombre entier de bits quel que soit les débits en ligne.

9. Trames descendante et montante conformes à l'une quelconque des revendication 1 à 8, caractérisées en ce que lesdits débits de données des équipements terminaux sont 192 kbits/s, N x 2048 kbits avec N > 1, et 155,520 Mbit/s, et la durée de chaque cellule temporelle coïncide avec 64 octets au débit en ligne de 196,608 Mbit/s associé au débit de données d'équipement terminal de 155,520 Mbit/s.

**Claims**

1. Multirate periodic downstream and upstream frames transmitted in full-duplex mode on a tree-structured bidirectional line (11) respectively at a first wavelength from a central equipment (1) to a plurality of terminal equipments ($2_1$-$2_l$) and at a second wavelength different from the first wavelength from the plurality of terminal equipments ($2_1$-$2_l$) to the central equipment (1), the terminal equipments receiving and transmitting data cells having a constant duration with respective different line bit rates (D1, D2, D3),

in said downstream and upstream frames, a useful data field being reserved for consecutive time cells in a predetermined number which are intended to be occupied by data cells respectively received ($S_i$, $S_{i+3}$) and transmitted ($S'_i$, $S'_{i+3}$) by terminal equipments communicating ($2_i$, $2_{i+3}$) with the central equipment (1), each data cell in said useful data field being located by a rank,

characterized in that

with first data cells ($S_i$, $S_{i+3}$) in the downstream frame which are received by a communicating terminal equipment and which have given ranks ($C_i$, $C_{i+3}$) in said useful data field correspond first data cells ($S'_i$, $S'_{i+3}$) in the upstream frame which are transmitted by said communicating terminal equipment and which have ranks in said useful data field respectively equal to first sums of a predetermined integer at least equal to one and said given ranks modulo the predetermined number of time cells (352) in said useful data field.

2. Downstream and upstream frames according to claim 1, characterized in that respective groups of first data cells are assigned in the frames to communicating terminal equipments, and the predetermined integer is substantially equal to half (176) the predetermined number of time cells in said useful data field.

3. Downstream and upstream frames according to claim 2, characterized by

second data cells in said upstream frame which are associated with second data cells received by a terminal equipment in said downstream frame and which are transmitted by said terminal equipment ($2_1$-$2_l$) in free first time cells of said useful data field not occupied by first data cells.

4. Downstream and upstream frames according to claim 3, characterized in that said first and second data cells received and transmitted by a communicating terminal equipment ($2_i$, $2_{i+3}$) are consecutively combined in at least one group ($S'_i$, $S'_{i+3}$) in the downstream frame and in at least one group ($S'_i$, $S'_{i+3}$) in the upstream frame respectively.

5. Downstream and upstream frames according to claim 3 or 4, characterized by at least a second downstream frame data cell containing the rank of a first time cell not occupied in the upstream frame to be transmitted to the terminal equipment.

6. Downstream and upstream frames according to any one of claims 1 to 5, characterized in that time cells are assigned to a communicating terminal equipment according to the line bit rate of the terminal equipment which is at least equal to a data bit rate in said terminal equipment.

7. Downstream and upstream frames according to any one of claims 1 to 6, characterized by a transmission of each upstream frame first data cell by a communicating terminal equipment ($2_i$, $2_{i+3}$) with a time-delay relative to a downstream frame receive start time by the terminal equipment equal to the sum of the product of the respective first sum by the cell duration and at least one correction time-delay dependent on the length ($L_1$, $L_l$) of said line between said communicating terminal equipment ($2_i$, $2_{i+3}$) and said central equipment (1).

8. Downstream and upstream frames according to any one of claims 1 to 7, characterized in that said line bit rates are multiples of a common factor and a duration of each time cell coincides with an integer number of bits regardless of the line bit rates.

9. Downstream and upstream frames according to any one of claims 1 to 8, characterized in that said data bit rates of the terminal equipments are 192 kbit/s, N x 2048 kbit/s where N > 1, and 155.520 Mbit/s, and the duration of each time cell coincides with 64 octets at the line bit rate of 196.608 kbit/s associated with the terminal equipment data bit rate of 155.520 Mbit/s.

**Patentansprüche**

1. Mehrfache Datenübertragungsraten aufweisende, sich periodisch wiederholende Abwärtsrichtungs- und Aufwärtsrichtungsrahmen, die in der Vollduplexbetriebsart über eine bidirektionale, verzweigte Leitung (11) jeweils mit einer ersten Wellenlänge von einer zentralen Einrichtung (1) zu einer Anzahl von Endeinrichtungen ($2_1$-$2_l$) und mit einer von der ersten Wellenlänge verschiedenen zweiten Wellenlänge von einer Anzahl von Endeinrichtungen ($2_1$-$2_l$) zu der zentralen Einrichtung (1) übertragen werden, wobei die Endeinrichtungen Datenzellen empfangen und übertragen, die eine konstante Dauer jeweils bei entsprechenden unterschiedlichen Leitungsdatenübertragungsraten (D1, D2, D3) haben, wobei in den Abwärtsrichtungs- und Aufwärtsrichtungsrahmen ein Nutzdatenfeld für aufeinanderfolgende temporäre Zellen in einer vorbestimmten Anzahl reserviert ist, die dazu bestimmt sind, durch jeweils empfangene Datenzellen ($S_i$, $S_{i+3}$) belegt zu werden und durch Endeinrichtungen in Kommunikation ($2_i$, $2_{i+3}$) mit der zentralen Einrichtung (1) übertragen zu werden, wobei jede Datenzelle im Nutzdatenfeld durch einen Rang lokalisiert wird, dadurch **gekennzeichnet**, daß

erste Datenzellen ($S_i$, $S_{i+3}$) im Abwärtsrichtungsrahmen, die durch eine Endeinrichtung in Kommunikation empfangen werden und die Datenränge ($C_i$, $C_{i+3}$) im Nutzdatenfeld haben, ersten Datenzellen ($S'_i$, $S'_{i+3}$) im Aufwärtsrichtungsrahmen entsprechen, die durch die Endeinrichtung in Kommunikation übertragen werden, die Ränge im Nutzdatenfeld jeweils gleich ersten Summen einer vorbestimmten ganzen Zahl wenigstens gleich Eins haben und besagte gegebene Datenränge modulo die vorbestimmte Zahl von temporären Zellen (352) im Nutzdatenfeld.

2. Abwärtsrichtungs- und Aufwärtsrichtungsrahmen nach Anspruch 1, dadurch **gekennzeichnet**, daß in den Rahmen entsprechende Gruppen erster Datenzellen Endeinrichtungen in Kommunikation zugeordnet werden und die vorbestimmte ganze Zahl im wesentlichen gleich der Hälfte (176) der vorbestimmten Zahl von temporären Zellen im Nutzdatenfeld ist.

3. Abwärtsrichtungs- und Aufwärtsrichtungsrahmen nach Anspruch 2, gekennzeichnet durch

zweite Datenzellen im Aufwärtsrichtungsrahmen, die mit zweiten Datenzellen im Abwärtsrichtungsrahmen verknüpft werden, die durch eine Endeinrichtung empfangen worden sind und die durch die Endeinrichtung ($2_1$-$2_l$) in ersten freien temporären Zellen des Nutzdatenfeldes übertragen werden, die nicht durch erste Datenzellen belegt sind.

4. Abwärtsrichtungs- und Aufwärtsrichtungsrahmen nach Anspruch 3, dadurch **gekennzeichnet**, daß die ersten und zweiten Datenzellen, die durch eine Endeinrichtung in Kommunikation ($2_i$, $2_{i+3}$) empfangen und übertragen worden sind, aufeinanderfolgend jeweils in wenigstens einer Gruppe ($S'_i$, $S'_{i+3}$) im Abwärtsrichtungsrahmen und in wenigstens einer Gruppe ($S'_i$, $S'_{i+3}$) im Aufwärtsrichtungsrahmen zusammengestellt werden.

5. Abwärtsrichtungs- und Aufwärtsrichtungsrahmen nach Anspruch 3 oder 4, **gekennzeichnet** durch wenigstens eine zweite Abwärtsrichtungsrahmendatenzelle, die den Rang einer ersten temporären Zelle enthält, die im zur Endeinrichtung zu übertragenden Aufwärtsrichtungsrahmen nicht belegt ist.

6. Abwärtsrichtungs- und Aufwärtsrichtungsrahmen nach einem beliebigen der Ansprüche 1 bis 5, dadurch **gekennzeichnet**, daß temporäre Zellen einer Endeinrichtung in Kommunikation abhängig von der Leitungsübertragungsrate der Endeinrichtung zugeordnet werden, die wenigstens gleich einer Datenübertragungsrate in der Endeinrichtung ist.

7. Abwärtsrichtungs- und Aufwärtsrichtungsrahmen nach einem beliebigen der Ansprüche 1 bis 6, **gekennzeichnet** durch eine Übertragung jeder ersten Aufwärtsrichtungsrahmendatenzelle durch eine Endeinrichtung in Kommunikation ($2_i$, $2_{i+3}$) mit einer Verzögerung in bezug auf einen Anfangszeitpunkt des Empfangs des Abwärtsrichtungsrahmens durch die Endeinrichtung gleich der Summe des Produkts der ersten entsprechenden Summe durch die Zellendauer und wenigstens einer Korrekturverzögerung abhängig von der Länge ($L_1$, $L_l$) der Leitung zwischen der Endeinrichtung in Kommunikation ($2_i$, $2_{i+3}$) und der zentralen Einrichtung (1).

8. Abwärtsrichtungs- und Aufwärtsrichtungsrahmen nach einem beliebigen der Ansprüche 1 bis 7, dadurch **gekennzeichnet**, daß die Leitungsdatenübertragungsraten untereinander ein Mehrfaches sind und eine Dauer jeder temporären Zelle mit einer ganzzahligen Bitzahl zusammenfällt, was auch die Leitungsdatenübertragungsraten sind.

9. Abwärtsrichtungs- und Aufwärtsrichtungsrahmen nach einem beliebigen der Ansprüche 1 bis 8, dadurch **gekennzeichnet**, daß die Datenübertragungsraten der Endeinrichtungen 192 kBit/s, N x 2048 kBit mit N > 1 und 155.520 MBit/s sind und die Dauer jeder temporären Zelle mit 64 Oktetten beim Leitungsdurchsatz von 196.608 MBit/s zusammenfällt, der mit der Datenübertragungsrate der Endeinrichtung von 155.520 MBit/s verknüpft ist.

EP 0 643 505 B1

# FIG.1

TERMINAISONS NUMERIQUES
DE RESEAU OPTIQUE
(TNRO)

V5
192 kbit/s

TERMINAL
DE
LIGNE
OPTIQUE

(TLO)

PLESIOCHRONE
N x 2048 kbit/s

ATM
155,520 Mbit/s

FO

COUPLEUR
PASSIF

$FO_1(L_1)$

$FO_i(L_i)$

$FO_I(L_I)$

$2_1$

$2_i$

$2_I$

$3_1$

$3_i$

$3_I$

TERMINAUX
D'USAGER

# FIG.2

EP 0 643 505 B1

EP 0 643 505 B1

## FIG.3A

BAS DEBIT EN LIGNE  —k1→  MOYEN DEBIT EN LIGNE  —k2→  HAUT DEBIT EN LIGNE

N1 ↑

768 kbit/s

↑ PPCM

192 kbit/s   256 kbit/s

N2 ↑

2,048 Mbit/s

N3 ↑

PPCM

19,440 Mbit/s = 155,520/8 Mbit/s

Nombre de bits par cellule au débit en ligne ATM

## FIG.3B

D1 = BAS DEBIT EN LIGNE  —k1→  D2 = MOYEN DEBIT EN LIGNE  —k2'→  D3 = HAUT DEBIT EN LIGNE

N1 ↑

768 kbit/s

↑ PPCM

192 kbit/s   256 kbit/s

N2 ↑

2,048 Mbit/s

N3' ↑

Nombre de bits par cellule au débit en ligne ATM

14